# EUROPEAN PATENT SPECIFICATION

(11) **EP 3 333 078 B1**
(45) Date of publication and mention of the grant of the patent: **21.10.2020**
(21) Application number: 17206189.7
(22) Date of filing: 08.12.2017
(51) Int. Cl.: B64D 13/06, B64D 13/08

(54) **AIR DISTRIBUTION SYSTEM WITH RECIRCULATING ZONE TRIM TEC**
LUFTVERTEILUNGSSYSTEM MIT THERMOELEKTRISCHER KÜHLVORRICHTUNG ZUR TRIMMUNG VON RÜCKFÜHRUNGSZONEN
SYSTÈME DE DISTRIBUTION D'AIR AVEC REFROIDISSEUR THÉRMOELECTRIQUE POUR REGLAGE FIN DE ZONES DE RECIRCULATION

(30) Priority: 08.12.2016 US 201615373082
(43) Date of publication of application: 13.06.2018
(73) Proprietor: Hamilton Sundstrand Corporation, Charlotte, NC 28217 (US)
(72) Inventor: ARMY, Donald E., Enfield, CT Connecticut 06082 (US)
(74) Representative: Dehns

(56) References cited:
- EP-A1- 3 090 950
- US-A1- 2011 174 006
- US-A1- 2013 340 459
- US-A1- 2014 060 086
- US-A1- 2015 246 729
- US-A1- 2016 003 557

## Description

### BACKGROUND

An air cycle machine (ACM) is the refrigeration unit of the environmental control system (ECS) used in pressurized gas turbine-powered aircraft. Normally an aircraft has two or more ACMs. Each ACM and its components are often referred to as an air conditioning pack, or A/C pack. On most jetliners, the A/C packs are located in the wing-to-body fairing (aerodynamic structure) between the two wings beneath the fuselage.

The air cycle cooling process is achieved primarily by expanding compressed engine air through an ACM cooling turbine, instead of a phase changing material such as Freon, with the cooled output air from the process being used directly for cabin ventilation or for cooling electronic equipment. Some or all of the A/C pack exhaust air can be ducted into the pressurized fuselage and is typically mixed with filtered air from the ECS's recirculation fans, and fed into a mix manifold. On most modern jetliners, the airflow in the mix manifold is approximately half outside air and half filtered air. Air from the mix manifold is directed to overhead distribution nozzles in the various zones of the aircraft.

Temperature in each zone is typically adjusted by adding small amounts of high temperature trim air that is tapped off of the A/C pack air supply and regulated to be slightly higher than the cabin pressure. In order to transfer trim air to the zone ducting from the A/C pack, a conventional aircraft utilizes a system of pressure regulating valves, pressure sensors, trim valves, check valves, mufflers, bulkhead shrouds, structural penetrations and structural reinforcement doublers. Such system for transferring trim air to zone ducting, generically referred to herein as a "trim system," also includes ducts, along with duct couplings, hangers and supports, and trim injectors.

US 2011/174006 A1 and US 2015/246729 A1 relate to environmental control systems for an aircraft.

### BRIEF DESCRIPTION

Disclosed is a system for distributing air to plural aircraft zones as claimed in claim 1, the system comprising: a thermal electronic cooler trim module (TEC), fluidly connected between a recirculating fan and the mix manifold; the TEC including: multiple TEC zones, each fluidly connected to, and sized relative to heating requirements of, a respective one of the aircraft zones; a first TEC inlet, through which a first portion of the recirculated air enters the TEC, is heat treated in a first heating direction, and is exhausted toward the mix manifold; and a second TEC inlet, through which a second portion of the recirculated air enters the TEC zones, is heat treated in a second heating direction, and is exhausted toward the aircraft zones, for mixing with the manifold air.

Further embodiments may include that the TEC zones, are provided by: internally partitioning a unitary TEC to provide separate TEC chambers therein, wherein each TEC chamber provides one of the TEC zones; or fluidly connecting plural TECs, where each of the plural TECs provides at least one of the TEC zones.

Further embodiments may include plural overboard diverter valves, fluidly connected between the TEC zones, and respective aircraft zones, wherein the overboard diverter valves, are operable between: a first state in which recirculated air from the TEC zones, is delivered to the aircraft zones; and a second state in which recirculated air from the TEC zones, bypasses the aircraft zones, and is delivered overboard.

Further embodiments may include that the overboard diverter valves, either operate independently or are interconnected to operate simultaneously.

Further embodiments may include a controller that controls the TEC and overboard diverter valves, based on aircraft zone thermal conditions.

Further embodiments may include that the TEC zones, are independently controllable for providing different heating conditions in different aircraft zones.

Further embodiments may include that the controller is programed to: (i) determine that heating or cooling of the aircraft zones, is required to cool a heat soaked airplane cabin or warm a cold soaked airplane cabin; and (ii) actuate the overboard diverter valves, into the second state responsive to the determination.

Further disclosed is an aircraft including a system for distributing air to plural aircraft zones that receive manifold air from a mix manifold, the system comprising: a thermal electronic cooler trim module (TEC), fluidly connected between a recirculating fan and the mix manifold; the TEC including: multiple TEC zones, each fluidly connected to, and sized relative to heating requirements of, a respective one of the aircraft zones; a first TEC inlet, through which a first portion of the recirculated air enters the TEC, is heat treated in a first heating direction, and is exhausted toward the mix manifold; and a second TEC inlet, through which a second portion of the recirculated air enters the TEC zones, is heat treated in a second heating direction, and is exhausted toward the aircraft zones, for mixing with the manifold air.

Additionally disclosed is a method as claimed in claim 9 for distributing air to plural aircraft zones, that receive manifold air from a mix manifold, comprising: directing recirculated air toward a thermal electronic cooler trim module (TEC), the TEC fluidly connected between a recirculating fan and the mix manifold, the TEC including multiple TEC zones, each fluidly connected to, and sized relative to heating requirements of, a respective one of the aircraft zones; heat treating, in a first heating direction, a first portion of the recirculated air entering the TEC through a first TEC inlet, and thereafter exhausting the first portion of recirculated air toward the mix manifold; and heat treating, in a second heating direction, a second portion of the recirculated air entering the TEC zones, through a second TEC inlet, and thereafter exhausting the second portion of recirculated air toward the aircraft zones, for mixing with the manifold air.

Further embodiments may include directing recirculated air from the TEC zones, to plural overboard diverter valves, fluidly connected between the TEC zones, and respective aircraft zones, wherein the overboard diverter valves, are operable between: a first state in which recirculated air from the TEC zones, is delivered to the aircraft zones; and a second state in which recirculated air from the TEC zone, bypasses the aircraft zones, and is delivered overboard.

Further embodiments may include that the overboard diverter valves, either operate independently or are interconnected to operate simultaneously.

Further embodiments may include controlling the TEC and the overboard diverter valves, with a controller based on aircraft zone thermal conditions.

Further embodiments may include independently controlling the TEC zones, for providing different heating conditions in different aircraft zones.

Further embodiments may include that steps performed by the controller include: (i) determining that heating or cooling of the aircraft zones, is required to cool a heat soaked airplane cabin or warm a cold soaked airplane cabin; and (ii) actuating the overboard diverter valves, into the second state responsive to the determination.

### BRIEF DESCRIPTION OF THE DRAWINGS

The following descriptions should not be considered limiting in any way. With reference to the accompanying drawings, like elements are numbered alike:
FIG. 1 is a schematic illustration of a disclosed air distribution system; and
FIGS. 2A and 2B are flowcharts illustrating methods of operating a disclosed controller for the air distribution system.

### DETAILED DESCRIPTION

A detailed description of one or more embodiments of the disclosed apparatus and method are presented herein by way of exemplification and not limitation with reference to the Figures.

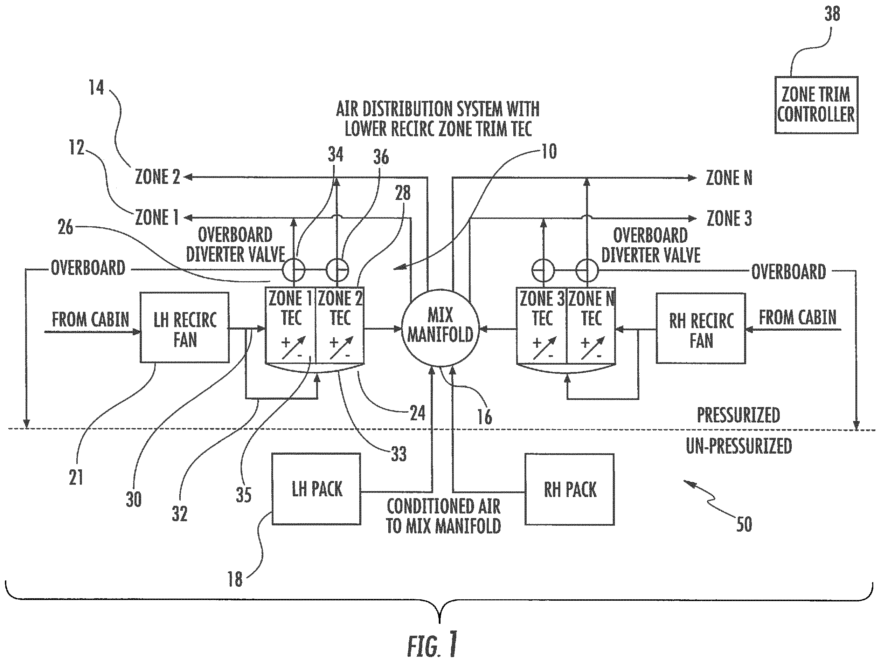

Turning to FIG. 1, disclosed is a system 10 for distributing air to plural aircraft zones 12, 14. The aircraft zones 12, 14 are illustrated on the left side of FIG. 1 in a two zone configuration. The aircraft zones 12, 14 receive manifold air from a mix manifold 16, which receives conditioned air from an air conditioning pack 18.

A thermal electronic cooler trim module (TEC) 24 is fluidly connected between a recirculating fan 21 and the mix manifold 16. The TEC 24 has multiple zones 26, 28, each fluidly connected to, and sized relative to heating requirements of, a respective one of the aircraft zones 12, 14. For example, the TEC 24 includes a first zone 26 connected to and sized to meet heating requirements of the first aircraft zone 12 and a second zone 28 connected to and sized to meet heating requirements of the second aircraft zone 14.

The TEC 24 includes a first inlet 30 through which a first portion of the recirculated air enters the TEC 24 and is toward the mix manifold 16. The TEC 24 includes a second inlet 32 through which a second portion of the recirculated air enters the TEC zones 26, 28 and is exhausted from the TEC zones 26, 28 toward respective aircraft zones 12, 14.

In the TEC 24, the first portion of recirculated air is heat treated in a first heating direction, such as heated or cooled. In the TEC zones 26, 28, the second portion of recirculated air is heat treated in a second heating direction, such as cooled or heated, i.e., opposite to the first heating direction. That is, the TEC is direct current (DC) powered. Reversing the electrical polarity of a TEC, via the TEC controller, reverses the TEC's operational function in each portion.

The vertical line 35 separating the TEC zones 26, 28 schematically illustrates relative heating capacities. In the illustration, the TEC zones 26, 28 have the same heating capacities. As can be appreciated, the vertical line 35 could be positioned differently to illustrate a split in the flow tailored to different capacity TEC zones 26, 28, depending on the relative heating requirements of the aircraft zones 12, 14. For example, if aircraft zone 12 required 25% or 34% of the heat output of the combination of aircraft zones 12, 14, the separation line 35 would be similarly proportioned. Mathematically by area in the schematic, (TEC zone 26) / (TEC zone 28) would be, e.g., 25% / 75%, or 34% / 66%. Heat requirements of the aircraft zones 12, 14 may be a function of relative aircraft zone volume sizes and/or other heating variables.

The TEC zones 26, 28 are provided by partitioning a single, i.e., unitary TEC 24 with an orifice plate or other means. Alternatively multiple TECs can be used to provide the TEC zones 26, 28, each TEC sized for use with one or more aircraft zones 12, 14. The TEC zones 26, 28 are connected via an inlet header 33. With this configuration, the second portion of recirculated air moves into inlet 32, upward through the TEC zones 26, 28 via header 33. The second portion of recirculated air is then heated or cooled in the TEC zones 26, 28, and then directed toward the aircraft zones 12, 14.

During normal operation, e.g., normal flight conditions, warm air is delivered to the aircraft zones 12, 14. During this time, the first portion of recirculated air flowing into the inlet 30 is cooled in the TEC 24 and thereafter directed to the mix manifold 16. The second portion of recirculated air flowing into the inlet 32 is heated in the TEC zone 26, 28 and thereafter directed to the aircraft zones 12, 14. This heating action effectively raises the temperature of mix manifold exhaust air by a desired amount.

Plural overboard diverter valves 34, 36 are provided, fluidly connected between the TEC zones 26, 28 and respective aircraft zones 12, 14. The overboard diverter valves 34, 36 are operable between at least two states. In a first state, the second portion of the recirculated air from the TEC zones 26, 28 is delivered to the aircraft zones 12, 14. In a second state, the second portion of the recirculated air from the TEC zones 26, 28 bypasses the aircraft zones 12, 14 and is delivered overboard.

The second state occurs for transient heating or cooling. For example, transient operation requires either heating, i.e., "pulling-up" the temperature of a cold soaked airplane cabin, or cooling, i.e., "pulling-down" the temperature of a hot soaked airplane cabin, both relatively quickly. Either of these conditions could occur a few tens of minutes prior passenger boarding, after an airplane has sat on a tarmac, e.g., on a hot summer day or a cold winter day.

During pull-up, i.e., a rapid heating transient operation, the first portion of the recirculated air flowing into the inlet 30, is heated in the TEC 24 and exhausted toward the mix manifold 16 to heat manifold air therein. The second portion of the recirculated air flowing into the inlet 32 is cooled in the TEC zones 26, 28, and the overboard diverter valves 34, 36 direct the cooled air overboard.

During pull-down, i.e., a rapid cooling transient operation, the first portion of the recirculated air flowing into the inlet 30, is cooled in the TEC 24, and directed to the mix manifold 16 to cool manifold air therein. The second portion of the recirculated air flowing into the inlet 32 is heated in the TEC zones 26, 28 and the overboard diverter valves 34, 36 direct the heated air overboard.

The overboard diverter valves 34, 36 are capable of being configured to operate either independently, e.g., using independent actuators, or interconnectedly, e.g., using a common actuator, to thereby operate simultaneously. Of these two options, the independent control provides greater aircraft zone environmental manipulation and the interconnected control results in a lower cost and provides a simplified operation.

A controller 38 is provided that controls the TEC 24 and overboard diverter valves 34, 36 based on aircraft zone thermal conditions. The controller 38 can be an independent component, separable from other system components. Alternatively, the controller functionality could be integrated into another system controller or a centralized aircraft computer. The benefit of the integrated approach is the sharing of a common cabinet enclosure, power supply, etc., with other systems.

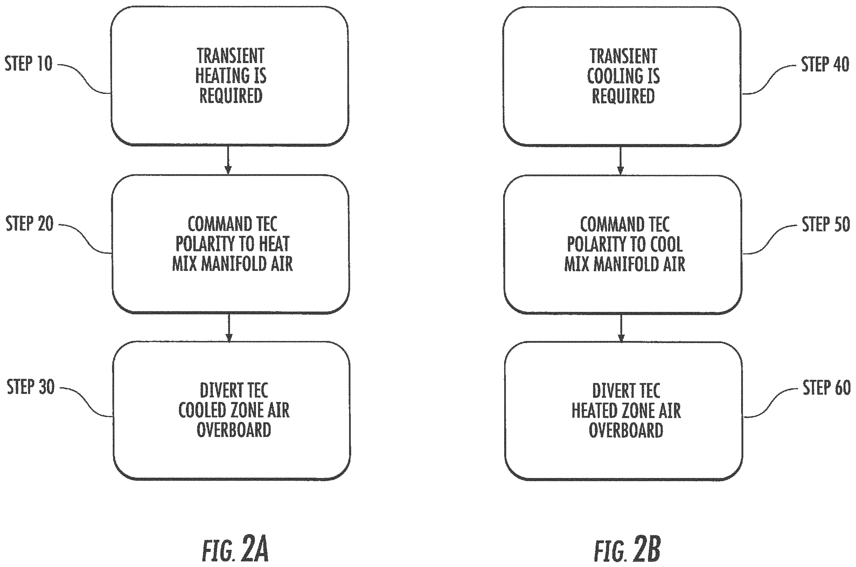

As illustrated in FIGS. 2A and 2B, the controller 38 is programed to control the TEC 24 based on the output needs of the aircraft zones 12, 14. For example, the controller is programed to position the overboard diverter valves 34, 36 in the second state upon determining that transient heating or cooling of the aircraft zones 12, 14 is required. For example, at Step 10, the system 10 determines that transient heating is required, e.g., on a cold winter day before passenger boarding. As a result, at Step 20, TEC polarity is set to heat the air directed to the mix manifold 16. While Step 20 is occurring, the system 10 executes Step 30, for which TEC cooled air is diverted overboard. On the other hand, at Step 40, the system 10 determines that transient cooling is required, e.g., on a hot summer day before passenger boarding. As a result, at Step 50, TEC polarity is set to cool the air directed to the mix manifold 16. While Step 50 is occurring, the system 10 executes Step 60, for which TEC heated air is diverted overboard.

Turning back to FIG. 1, as can be appreciated, a typical aircraft can have left and right hand cooling systems. For example, the above disclosed system 10 is the left hand system and the aircraft could have a right hand system 50. The systems 10, 50 can share the controller 38 and mix manifold 16, but can otherwise have independent components.

In sum, and as illustrated above, the disclosed embodiments integrate a thermal electric cooler (TEC) trim module 24 downstream, relative to the aircraft cooling flow circuit, of the aircraft recirculating fan 21. According to the disclosure, the TEC 24 can be partitioned into TEC zones 26, 28 to cool as few as one, or a plurality of the aircraft zones 12, 14. Flow partitions, set by zone requirements, can be achieved by partitioning the TEC 24 via use of the orifice plates or other means. As an alternative, using of multiple TECs to provide zone partitions provides a fault tolerant configuration.

Recirculated air is divided among inlets 30, 32 of TEC 24 to provide heat sink air flow, as well as trimmed airflow, to the individual aircraft zones 12, 14. That is, the TEC 24 can be used to vary polarity to aircraft zones 12, 14 by trimming up (as the heat source) or trimming down (as the heat sink) individual aircraft zones 12, 14, depending on temperature demand. That is, for the disclosed TEC trim system, the controller 38 can independently vary power and polarity to each TEC 24, and/or each TEC zone 26, 28 with the use of independent TECs, for trimming temperatures up or down. In comparison, with a conventional pneumatic system, the controller opens and closes the different zone trim valves to trim up, but not down, the zone delivered temperatures.

The use of the TEC 24 minimizes noise issues associated with conventional trim systems. In addition, the use of the TEC 24 requires less installation volume than a conventional trim system. For example, the disclosed system 10 eliminates conventional trim system hardware. Such eliminated hardware includes pressure regulating valves, check valves, pressure sensors, trim valves, mufflers, bulkhead shrouds, structural penetrations and structural reinforcement doublers. The eliminated trim system also includes ducts, along with duct couplings, hangers and supports, and trim injectors. In addition, eliminated is the typical arrangement of overboard diverter valves, facilitating pull-up and pull-down during system start-up transient operation.

Those skilled in the art who have the benefit of this description will realize that a variety of zone trim configurations could be used that are different than the illustrated example.

The preceding description is exemplary rather than limiting in nature. Variations and modifications to the disclosed examples may become apparent to those skilled in the art that do not necessarily depart from the scope of this invention which can only be determined by studying the following claims.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present disclosure has been described with reference to an exemplary embodiment or embodiments, it will be understood by those skilled in the art that various changes may be made without departing from the scope of the present invention as defined by the claims, Therefore, it is intended that the present disclosure not be limited to the particular embodiment disclosed as the best mode contemplated for carrying out this present disclosure, but that the present disclosure will include all embodiments falling within the scope of the claims.

## Claims

1. A system for distributing air to plural aircraft zones, the system comprising:
a mix manifold (16), wherein the plural aircraft zones receive manifold air from the mix manifold;
a recirculating fan (21), the system being **characterised by** a thermal electronic cooler trim module, TEC, (24), wherein the TEC is fluidly connected between the recirculating fan (21) and the mix manifold (16);
the TEC including:
multiple TEC zones (26, 28), each fluidly connected to, and sized relative to heating requirements of, a respective one of the aircraft zones, wherein the TEC is capable of heating and cooling air in the multiple TEC zones;
a first TEC inlet (30), through which a first portion of the recirculated air enters the TEC, is heat treated in a first heating direction, and is exhausted toward the mix manifold; and
a second TEC inlet (32), through which a second portion of the recirculated air enters the TEC zones, is heat treated in a second heating direction, and is exhausted toward the aircraft zones, for mixing with the manifold air.

2. The system of claim 1, where the TEC zones, are provided by:
internally partitioning a unitary TEC to provide separate TEC chambers therein, wherein each TEC chamber provides one of the TEC zones; or
fluidly connecting plural TECs, where each of the plural TECs provides at least one of the TEC zones.

3. The system of claim 2, further comprising plural overboard diverter valves (34, 36), fluidly connected between the TEC zones, and respective aircraft zones, wherein the overboard diverter valves, are operable between:
a first state in which recirculated air from the TEC zones, is delivered to the aircraft zones; and
a second state in which recirculated air from the TEC zones, bypasses the aircraft zones, and is delivered overboard.

4. The system of claim 3, wherein the overboard diverter valves, either operate independently or are interconnected to operate simultaneously.

5. The system of claim 4, further comprising a controller (38) that controls the TEC and overboard diverter valves, based on aircraft zone thermal conditions.

6. The system of claim 5, wherein the TEC zones, are independently controllable for providing different heating conditions in different aircraft zones.

7. The system of claim 5, wherein the controller is programed to: (i) determine that heating or cooling of the aircraft zones, is required to cool a heat soaked airplane cabin or warm a cold soaked airplane cabin; and (ii) actuate the overboard diverter valves, into the second state responsive to the determination.

8. An aircraft including a system for distributing air to plural aircraft zones that receive manifold air from a mix manifold as recited in any of the preceding claims.

9. A method for distributing air to plural aircraft zones, that receive manifold air from a mix manifold, comprising:
directing recirculated air toward a thermal electronic cooler trim module, TEC, the TEC fluidly connected between a recirculating fan and the mix manifold, the TEC including multiple TEC zones, each fluidly connected to, and sized relative to heating requirements of, a respective one of the aircraft zones;
heat treating, in a first heating direction, a first portion of the recirculated air entering the TEC through a first TEC inlet, and thereafter exhausting the first portion of recirculated air toward the mix manifold; and
heat treating, in a second heating direction, a second portion of the recirculated air entering the TEC zones, through a second TEC inlet, and thereafter exhausting the second portion of recirculated air toward the aircraft zones, for mixing with the manifold air.

10. The method of claim 9, further comprising providing the TEC zones by:
internally partitioning a unitary TEC to provide separate TEC chambers therein, wherein each TEC chamber provides one of the TEC zones; or
fluidly connecting plural TECs, where each of the plural TECs provides at least one of the TEC zones.

11. The method of claim 10, further comprising directing recirculated air from the TEC zones, to plural overboard diverter valves, fluidly connected between the TEC zones, and respective aircraft zones, wherein the overboard diverter valves, are operable between:
a first state in which recirculated air from the TEC zones, is delivered to the aircraft zones; and
a second state in which recirculated air from the TEC zone, bypasses the aircraft zones, and is delivered overboard.

12. The method of claim 11, wherein the overboard diverter valves, either operate independently or are interconnected to operate simultaneously.

13. The method of claim 12, further comprising controlling the TEC and the overboard diverter valves, with a controller (38) based on aircraft zone thermal conditions.

14. The method of claim 13, further comprising independently controlling the TEC zones, for providing different heating conditions in different aircraft zones.

15. The method of claim 14, wherein steps performed by the controller (38) include: (i) determining that heating or cooling of the aircraft zones, is required to cool a heat soaked airplane cabin or warm a cold soaked airplane cabin; and (ii) actuating the overboard diverter valves, into the second state responsive to the determination.

## Patentansprüche

1. System zum Verteilen von Luft in vielen Flugzeugzonen, wobei das System Folgendes umfasst:
einen Mischverteiler (16), wobei die mehreren Flugzeugzonen Luft von dem Mischverteiler verteilen;
einen Rückführungslüfter (21), wobei das System durch ein thermoelektrisches Kühlvorrichtungstrimmmodul (TEC, 24) gekennzeichnet ist, wobei das TEC fluidisch zwischen dem Rückführungslüfter (21) und dem Mischverteiler (16) verbunden ist;
wobei das TEC Folgendes beinhaltet:
mehrere TEC-Zonen (26, 28), wobei jede fluidisch mit einer jeweiligen der Flugzeugzonen verbunden und relativ zu deren Heizanforderungen bemessen ist, wobei das TEC dazu fähig ist, Luft in den mehreren TEC-Zonen zu kühlen und zu heizen;
einen ersten TEC-Einlass (30), durch den ein erster Teil der zurückgeführten Luft in das TEC eintritt, in eine erste Heizrichtung wärmebehandelt wird und in Richtung des Mischverteilers abgelassen wird; und
einen zweiten TEC-Einlass (32), durch den ein zweiter Teil der zurückgeführten Luft in die TEC-Zonen eintritt, in eine zweite Heizrichtung wärmebehandelt wird und in Richtung der Flugzeugzonen abgelassen wird, um sich mit der Verteilerluft zu vermischen.

2. System nach Anspruch 1, wobei die TEC-Zonen durch Folgendes bereitgestellt werden:
internes Aufteilen eines einheitlichen TEC, um separate TEC-Kammern darin bereitzustellen, wobei jede TEC-Kammer eine der TEC-Zonen bereitstellt; oder
fluidisches Verbinden von vielen TECs, wobei jedes der vielen TECS mindestens eine der TEC-Zonen bereitstellt.

3. System nach Anspruch 2, ferner umfassend viele Außenbordtrennventile (34, 36), die fluidisch zwischen den TEC-Zonen und jeweiligen Flugzeugzonen verbunden sind, wobei die Außenbordtrennventile zwischen Folgenden betriebsfähig sind:
einem ersten Zustand, in dem die zurückgeführte Luft aus den TEC-Zonen an die Flugzeugzonen geliefert wird; und
einem zweiten Zustand, in dem die zurückgeführte Luft aus den TEC-zonen die Flugzeugzonen umgeht und über Bord geliefert wird.

4. System nach Anspruch 3, wobei die Außenbordtrennventile entweder unabhängig betrieben werden oder miteinander verbunden sind, um gleichzeitig betrieben zu werden.

5. System nach Anspruch 4, ferner umfassend eine Steuerung (38), die das TEC und die Außenbordtrennventile auf Grundlage von Wärmebedingungen der Flugzeugzonen steuert.

6. System nach Anspruch 5, wobei die TEC-Zonen unabhängig gesteuert werden können, um unterschiedliche Heizbedingungen in unterschiedlichen Flugzeugzonen bereitzustellen.

7. System nach Anspruch 5, wobei die Steuerung zu Folgendem programmiert ist: (i) Bestimmen, dass ein Heizen oder Kühlen der Flugzeugzonen erforderlich ist, um eine wärmedurchdrungene Flugzeugkabine zu kühlen oder eine kältedurchdrungene Flugzeugkabine zu wärmen; und (ii) Betätigen der Außenbordtrennventile in den zweiten Zustand als Reaktion auf die Bestimmung.

8. Flugzeug, das ein System zum Verteilen von Luft an viele Flugzeugzonen beinhaltet, die Verteilerluft von einem Mischverteiler nach einem der vorhergehenden Ansprüche aufnehmen.

9. Verfahren zum Verteilen von Luft an viele Flugzeugzonen, die Verteilerluft von einem Mischverteiler aufnehmen, das Folgendes umfasst:
Leiten von zurückgeführter Luft in Richtung eines thermoelektrischen Kühlvorrichtungstrimmmoduls (TEC), wobei das TEC fluidisch zwischen einem Rückführungslüfter und dem Mischverteiler verbunden ist, wobei das TEC mehrere TEC-Zonen beinhaltet, wobei jede fluidisch mit einer jeweiligen der Flugzeugzonen verbunden und relativ zu deren Heizanforderungen bemessen ist;
Wärmebehandeln, in eine erste Heizungsrichtung, eines ersten Teils der zurückgeführten Luft, der durch einen ersten TEC-Einlass in das TEC eintritt, und danach Ablassen des ersten Teils der zurückgeführten Luft in Richtung des Mischverteilers; und
Wärmebehandeln, in einer zweiten Heizungsrichtung, eines zweiten Teils der zurückgeführten Luft, der durch einen zweiten TEC-Einlass in die TEC-Zonen eintritt, und danach Ablassen des zweiten Teils der zurückgeführten Luft in Richtung der Flugzeugzonen zum Mischen mit der Verteilerluft.

10. Verfahren nach Anspruch 9, ferner umfassend ein Bereitstellen der TEC-Zonen durch Folgendes:
internes Aufteilen eines einheitlichen TEC, um separate TEC-Kammern darin bereitzustellen, wobei jede TEC-Kammer eine der TEC-Zonen bereitstellt; oder
fluidisches Verbindung von vielen TECs, wobei jedes der vielen TECs mindestens eine der TEC-Zonen bereitstellt.

11. Verfahren nach Anspruch 10, ferner umfassend ein Leiten von zurückgeführter Luft aus den TEC-Zonen an viele Außenbordtrennventile, die fluidisch zwischen den TEC-Zonen und jeweiligen Flugzeugzonen verbunden sind, wobei die Außenbordtrennventile zwischen Folgenden betriebsfähig sind:
einem ersten Zustand, in dem die zurückgeführte Luft aus den TEC-Zonen an die Flugzeugzonen geliefert wird; und
einem zweiten Zustand, in dem die zurückgeführte Luft aus der TEC-Zone die Flugzeugzonen umgeht und über Bord geliefert wird.

12. Verfahren nach Anspruch 11, wobei die Außenbordtrennventile entweder unabhängig betrieben werden oder miteinander verbunden sind, um gleichzeitig betrieben zu werden.

13. Verfahren nach Anspruch 12, ferner umfassend ein Steuern des TEC und der Außenbordtrennventile mit einer Steuerung (38) auf Grundlage von Wärmebedingungen der Flugzeugzonen.

14. Verfahren nach Anspruch 13, ferner umfassend ein unabhängiges Steuern der TEC-Zonen zum Bereitstellen von unterschiedlichen Heizbedingungen in unterschiedlichen Flugzeugzonen.

15. Verfahren nach Anspruch 14, wobei die Schritte, die von der Steuerung (38) durchgeführt werden, Folgendes beinhalten: (i) Bestimmen, dass ein Heizen oder Kühlen der Flugzeugzonen erforderlich ist, um eine wärmedurchdrungene Flugzeugkabine zu kühlen oder eine kältedurchdrungene Flugzeugkabine zu wärmen; und (ii) Betätigen der Außenbordtrennventile in den zweiten Zustand als Reaktion auf die Bestimmung.

## Revendications

1. Système pour distribuer de l'air à plusieurs zones d'aéronef, le système comprenant :
un collecteur de mélange (16), dans lequel les plusieurs zones d'aéronef reçoivent de l'air de collecteur provenant du collecteur de mélange ;
un ventilateur de recirculation (21), le système étant **caractérisé par** un module de réglage fin de refroidisseur thermoélectrique, TEC, (24), dans lequel le TEC est relié fluidiquement entre le ventilateur de recirculation (21) et le collecteur de mélange (16) ;
le TEC comportant :
de multiples zones TEC (26, 28), chacune reliée fluidiquement à, et dimensionnée par rapport aux besoins en chauffage de, l'une respective des zones d'aéronef, dans lequel le TEC est capable de chauffer et de refroidir l'air dans les multiples zones TEC ;
une première entrée TEC (30), à travers laquelle une première partie de l'air recirculé entre dans le TEC, est traitée thermiquement dans une première direction de chauffage, et est évacuée vers le collecteur de mélange ; et
une seconde entrée TEC (32), à travers laquelle une seconde partie de l'air recirculé entre dans les zones TEC, est traitée thermiquement dans une seconde direction de chauffage, et est évacuée vers les zones d'aéronef, pour se mélanger avec l'air de collecteur.

2. Système selon la revendication 1, où les zones TEC sont pourvues :
du partitionnement interne d'un TEC unitaire pour y fournir des chambres TEC séparées, dans lequel chaque chambre TEC fournit l'une des zones TEC ; ou
du raccordement fluidique de plusieurs TEC, où chacun des plusieurs TEC fournit au moins une des zones TEC.

3. Système selon la revendication 2, comprenant en outre plusieurs vannes de dérivation vers l'extérieur (34, 36), reliées fluidiquement entre les zones TEC et les zones d'aéronef respectives, dans lequel les vannes de dérivation vers l'extérieur peuvent fonctionner entre :
un premier état dans lequel l'air recirculé des zones TEC est délivré aux zones d'aéronef ; et
un second état dans lequel l'air recirculé des zones TEC contourne les zones d'aéronef et est délivré vers l'extérieur.

4. Système selon la revendication 3, dans lequel les vannes de dérivation vers l'extérieur, fonctionnent indépendamment ou sont interconnectées pour fonctionner simultanément.

5. Système selon la revendication 4, comprenant en outre un dispositif de commande (38) qui commande le TEC et les vannes de dérivation vers l'extérieur, sur la base des conditions thermiques de la zone de l'aéronef.

6. Système selon la revendication 5, dans lequel les zones TEC peuvent être commandées indépendamment pour fournir différentes conditions de chauffage dans différentes zones d'aéronef.

7. Système selon la revendication 5, dans lequel le dispositif de commande est programmé pour : (i) déterminer que le chauffage ou le refroidissement des zones d'aéronef est nécessaire pour refroidir une cabine d'avion imprégnée de chaleur ou réchauffer une cabine d'avion imprégnée de froid ; et (ii) actionner les vannes de dérivation vers l'extérieur, dans le second état en réponse à la détermination.

8. Aéronef comportant un système pour distribuer de l'air à plusieurs zones d'aéronef qui reçoivent de l'air de collecteur provenant d'un collecteur de mélange selon l'une quelconque des revendications précédentes.

9. Procédé pour distribuer de l'air à plusieurs zones d'aéronef, qui reçoivent de l'air de collecteur provenant d'un collecteur de mélange, comprenant :
l'orientation de l'air recirculé vers un module de réglage fin de refroidisseur thermoélectrique, TEC, le TEC étant relié fluidiquement entre un ventilateur de recirculation et le collecteur de mélange, le TEC comportant de multiples zones TEC, chacune reliée fluidiquement et dimensionnée par rapport aux besoins en chauffage de l'une respective des zones d'aéronef ;
le traitement thermique, dans une première direction de chauffage, d'une première partie de l'air recirculé entrant dans le TEC à travers une première entrée TEC, puis l'évacuation de la première partie d'air recirculé vers le collecteur de mélange ; et
le traitement thermique, dans une seconde direction de chauffage, d'une seconde partie de l'air recirculé entrant dans les zones TEC, à travers une seconde entrée TEC, puis l'évacuation de la seconde partie d'air recirculé vers les zones d'aéronef, pour se mélanger avec l'air de collecteur.

10. Procédé selon la revendication 9, comprenant en outre les zones TEC étant pourvues :
du partitionnement interne d'un TEC unitaire pour y fournir des chambres TEC séparées, dans lequel chaque chambre TEC fournit l'une des zones TEC ; ou
du raccordement fluidique de plusieurs TEC, où chacun des plusieurs TEC fournit au moins une des zones TEC.

11. Procédé selon la revendication 10, comprenant en outre l'orientation de l'air recirculé depuis les zones TEC, vers plusieurs vannes de dérivation vers l'extérieur, reliées fluidiquement entre les zones TEC et les zones d'aéronef respectives, dans lequel les vannes de dérivation vers l'extérieur peuvent fonctionner entre :
un premier état dans lequel l'air recirculé des zones TEC est délivré aux zones d'aéronef ; et
un second état dans lequel l'air recirculé de la zone TEC contourne les zones d'aéronef et est délivré vers l'extérieur.

12. Procédé selon la revendication 11, dans lequel les vannes de dérivation vers l'extérieur, fonctionnent indépendamment ou sont interconnectées pour fonctionner simultanément.

13. Procédé selon la revendication 12, comprenant en outre la commande du TEC et des vannes de dérivation vers l'extérieur, avec un dispositif de commande (38) basé sur les conditions thermiques de la zone de l'aéronef.

14. Procédé selon la revendication 13, comprenant en outre la commande indépendante des zones TEC, pour fournir différentes conditions de chauffage dans différentes zones d'aéronef.

15. Procédé selon la revendication 14, dans lequel les étapes effectuées par le dispositif de commande (38) comportent : (i) la détermination que le chauffage ou le refroidissement des zones d'aéronef est nécessaire pour refroidir une cabine d'avion imprégnée de chaleur ou réchauffer une cabine d'avion imprégnée de froid ; et (ii) l'actionnement des vannes de dérivation vers l'extérieur, dans le second état en réponse à la détermination.
